# FASCICULE DE BREVET EUROPEEN

(11) **EP 2 359 030 B1**
(45) Date de publication et mention de la délivrance du brevet: **09.10.2013**
(21) Numéro de dépôt: 09801472.3
(22) Date de dépôt: 02.12.2009
(51) Int. Cl.: F16H 3/091, F16H 3/08

(54) **BOITE DE VITESSES A ARBRE AUXILIAIRE DE PREMIERE ET DE MARCHE ARRIERE**
GETRIEBE MIT EINER HILFSWELLE FÜR DEN ERSTEN GANG UND RÜCKWÄRTSGANG
GEARBOX WITH AN AUXILIARY SHAFT FOR FIRST GEAR AND REVERSE

(30) Priorité: 09.12.2008 FR 0858374
(43) Date de publication de la demande: 24.08.2011
(73) Titulaire: Renault S.A.S., 92100 Boulogne-Billancourt (FR)
(72) Inventeur: RAOUL, Michel, F-78990 Elancourt (FR)
(74) Mandataire: Rougemont, Bernard
(86) Numéro de dépôt international: PCT/FR2009/052366
(87) Numéro de publication internationale: WO 2010/066986

(56) Documents cités:
- EP-A- 0 595 059
- EP-A- 1 798 445
- FR-A- 2 770 599

## Description

L'invention concerne une boîte de vitesses manuelle ou robotisée de véhicule automobile.

Cette invention trouve une application privilégiée, mais non limitative sur une boîte de vitesses à passages sous couple, dont les dispositifs de couplage des rapports de rang supérieur à un, sont des coupleurs coniques auto-assistés

Elle concerne plus particulièrement une boîte de vitesses à arbres parallèles à engrenages, comprenant un arbre primaire et un arbre secondaire qui portent un ensemble de dentures fixes engrenant avec des pignons fous susceptibles d'être couplés sélectivement avec l'arbre qui les porte par des dispositifs de couplage pour engager les différents rapports de la boîte, et un arbre auxiliaire susceptible de recevoir et de renvoyer le mouvement de l'arbre primaire sur l'arbre secondaire sur certains rapports.

Selon une disposition connue dans la publication EP 1 798 445, une boîte de vitesses à passages sous couple peut posséder un arbre d'entrée unique et un seul embrayage d'entrée, et deux arbres secondaires. Le premier arbre secondaire (principal) porte un pignon de descente attaquant directement la couronne, et le deuxième arbre secondaire (auxiliaire) entraîne l'arbre secondaire principal par l'intermédiaire de deux couples de pignons porté par un arbre intermédiaire. Cet arbre intermédiaire supplémentaire porte également le pignon intermédiaire de marche arrière.

Cette disposition apporte un gain de compacité axial de la boîte, une facilité dans la conception de la commande interne, et davantage de liberté dans l'établissement des étagements.

En revanche, elle nécessite un arbre supplémentaire. De plus, un certain nombre de rapports de la boîte sont renvoyés par cet arbre intermédiaire supplémentaire, ce qui dégrade le rendement énergétique sur ces rapports, à cause des deux engrènements supplémentaires entre l'entrée et la sortie de la boîte.

Le document EP 0 595 059 A1 divulgue une boîte de vitesses conformément au préambule de la revendication 1.

Pour conserver la compacité de la boîte de vitesses à passages de vitesses sous couple illustrée dans la publication EP 1 798 445, tout en améliorant le rendement énergétique et en réduisant le coût de fabrication, l'invention propose un nouvel agencement interne permettant de se dispenser de l'arbre intermédiaire supplémentaire.

Dans ce but, elle propose que l'arbre auxiliaire porte les pignons fous et le groupe de synchronisation crabotage des rapports de première et de marche arrière.

De préférence, l'arbre auxiliaire porte un pignon fou d'entrée entraîné en permanence par l'arbre primaire et une bague d'entraînement solidaire de l'arbre auxiliaire, susceptible d'être entraînée par le pignon fou.

La bague peut ainsi être montée en roue libre autour du pignon d'entrée, de manière à transmettre le couple du primaire à l'arbre auxiliaire sur certains rapports.

D'autres caractéristiques et avantages de la présente invention apparaîtront clairement à la lecture de la description suivante d'un mode de réalisation non limitatif de celle-ci, en se reportant aux dessins annexés, sur lesquels :
- la figure 1 est une vue en coupe longitudinale et à plans rabattus passant l'arbre auxiliaire, l'arbre primaire, l'arbre secondaire et le différentiel,
- la figure 2 est une vue schématique en coupe transversale montrant le positionnement relatif des arbres,
- la figure 3 est une vue schématique en coupe transversale montrant les engrènements permettent de réaliser le mouvement de marche arrière,
- la figure 4 est une vue en coupe longitudinale et à plans rabattus passant l'arbre auxiliaire, l'arbre primaire, l'arbre secondaire et le différentiel montrant le cheminement du couple dans la boîte en marche arrière engagée,
- la figure 5 est une vue schématique en coupe transversale montrant les engrènements permettent de réaliser le renvoi de mouvement en première de l'arbre auxiliaire à l'arbre secondaire, et
- la figure 6 est une vue en coupe longitudinale et à plans rabattus passant l'arbre auxiliaire, l'arbre primaire, l'arbre secondaire et le différentiel montrant le cheminement du couple dans la boîte en première engagée.

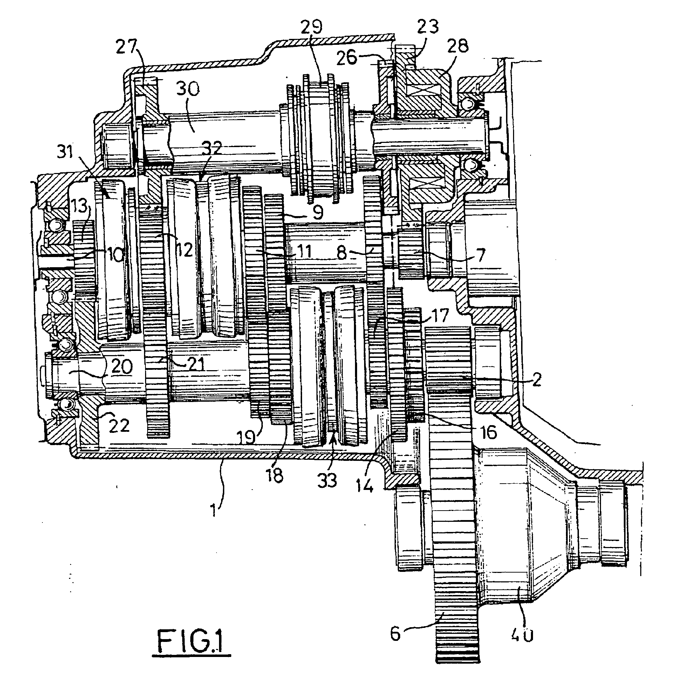

La boîte de vitesses de la figure 1 présente dans un carter de mécanisme 1, un arbre primaire 10, relié au moteur du véhicule par un embrayage d'entrée (non représenté), un arbre secondaire 20, qui portent un ensemble de dentures fixes engrenant avec des pignons fous susceptibles d'être couplés sélectivement avec l'arbre qui les porte par des dispositifs de couplage pour engager les différents rapports de la boîte. Cette boîte comporte également un arbre auxiliaire susceptible de recevoir et de renvoyer le mouvement de l'arbre primaire 10 sur l'arbre secondaire 20 sur certains rapports.

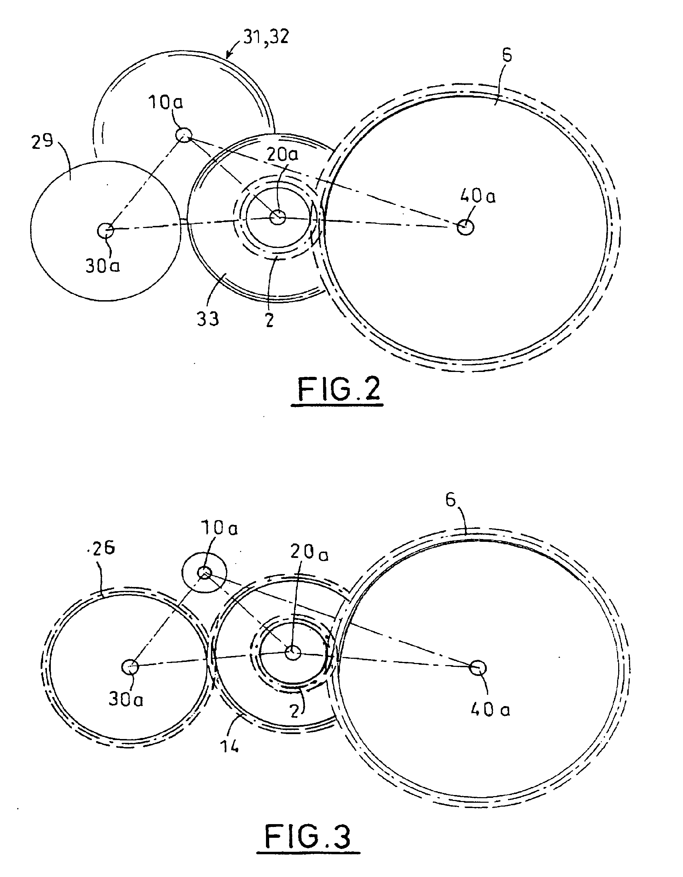

Sur la figure 2, on a représenté l'axe 10a de l'arbre primaire, l'axe 20a de l'arbre secondaire, l'axe 30a de l'arbre auxiliaire et l'axe 40a du différentiel 40. L'arbre primaire 10 est sur le dessus de la boîte, son axe 10a définit un triangle avec l'axe 30a de l'arbre auxiliaire 30 et l'axe 40a du différentiel 40. L'axe 20a est pratiquement aligné avec ces deux derniers. On a également représenté le pignon d'attaque 2 de l'arbre secondaire sur la couronne de pont 6 du différentiel 40. On voit l'encombrement du groupe de synchronisation de première et de marche arrière 29, ainsi que celui du coupleur de quatrième et de sixième 33, porté par l'arbre secondaire 20. Enfin, on a représenté l'encombrement des coupleurs de deuxième 31, et de troisième et cinquième 32.

En se reportant à la figure 1, on retrouve ces éléments. On voit aussi l'ensemble des pignons et des coupleurs de la boîte. L'arbre primaire 10 porte successivement, de la droite vers la gauche, un pignon fixe de première et de marche arrière 7, un pignon fixe de sixième 8, un pignon fixe de quatrième 9. Viennent ensuite un pignon fou de cinquième 11, un pignon fou de troisième 12, et un pignon fou de deuxième 13.

L'arbre secondaire 20 porte de la droite vers la gauche son pignon d'attaque 2 sur la couronne de pont 6, un pignon fixe secondaire de marche arrière 14 portant la roue de parking 16, le pignon fou de sixième 17, le pignon fou de quatrième 18, le pignon fixe de cinquième 19, le pignon fixe de troisième et de renvoi de première 21,et le pignon fixe de deuxième 22.

L'arbre auxiliaire 30 porte notamment les pignons fous de marche arrière 26 et de première 27, et le groupe de synchronisation crabotage 29 des rapports de première et de marche arrière. Il porte un pignon fou d'entrée de première et de marche arrière 23 entraîné en permanence par le pignon fixe de première et de marche arrière 7 du primaire 10, un pignon fou de marche arrière 26 engrenant avec le pignon secondaire fixe de marche arrière 14, et un pignon fou de marche avant 27 engrenant avec le pignon fixe de troisième et de renvoi de première 21. Une bague rotative 28 d'entraînement est fixée sur l'arbre auxiliaire 30. La bague 28 est solidaire de l'arbre auxiliaire 30. Elle est susceptible d'être entraînée par le pignon fou 23. Elle est montée en roue libre autour du pignon fou d'entrée 23, de manière à transmettre le couple de l'arbre primaire 10 à l'arbre auxiliaire 30 sur certains rapports, à savoir la première et la marche arrière, et à tourner librement autour de celui-ci sur les autres rapports.

Les moyens de couplage de la boîte sont les suivants :
- un groupe de synchronisation par crabotage 29 pour les pignons fous de première 27 et de marche arrière 26 sur l'arbre auxiliaire 30,
- un coupleur conique auto assisté de deuxième 31 sur le primaire 10
- un groupe de coupleurs coniques auto assistés de troisième et de cinquième 32, également sur le primaire, et
- un groupe de coupleurs coniques auto assistés de quatrième et de sixième 33 sur le secondaire 30.

Les coupleurs coniques 31, 32, 33 sont par exemple des coupleurs par cônes de friction à rampes d'entraînement, tels que décrits dans la publication FR 2 821 652, permettant de synchroniser et de rendre solidaire en rotation les pignons de rang supérieur à un sur leur arbre, sans crabotage de denture.

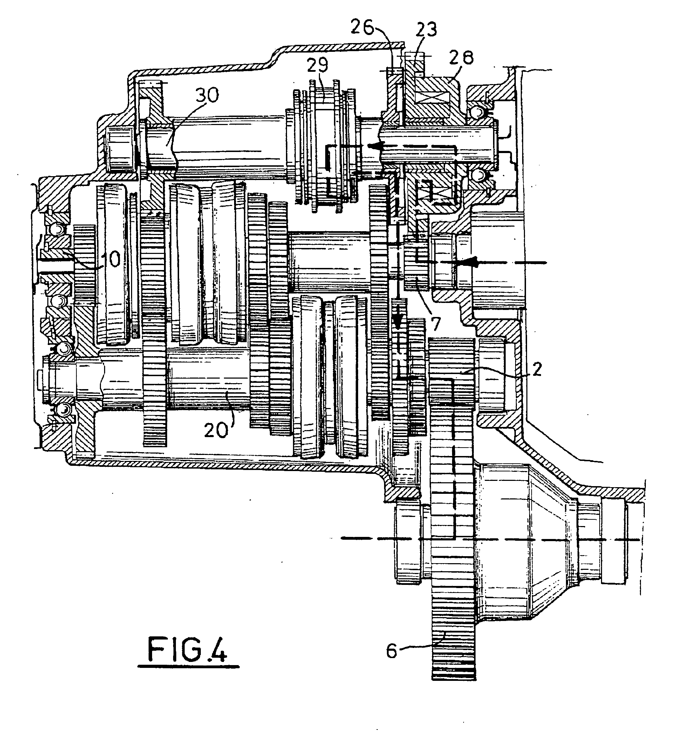

La marche arrière est obtenue de la façon suivante (voir figures 3 et 4). Le mouvement passe du pignon fixe primaire de première et de marche arrière 7 sur le pignon fou d'entrée de première et de marche arrière 23 sur l'arbre auxiliaire 30. Le pignon 23 entraîne la bague 28 et l'arbre 30. Le pignon fou de marche arrière 26, rendu solidaire de l'arbre 30 par le synchroniseur 29, transmet le mouvement reçu de ce dernier au pignon fixe secondaire de marche arrière 14. Il passe enfin, par l'arbre secondaire 20 et le pignon d'attaque 2, sur la couronne de différentiel 6. Ainsi, le mouvement du pignon fou de marche arrière 26 est transféré de l'arbre auxiliaire 30 à l'arbre secondaire 20, par engrènement direct du pignon fou de marche arrière 26, sur le pignon secondaire fixe de marche arrière 14.

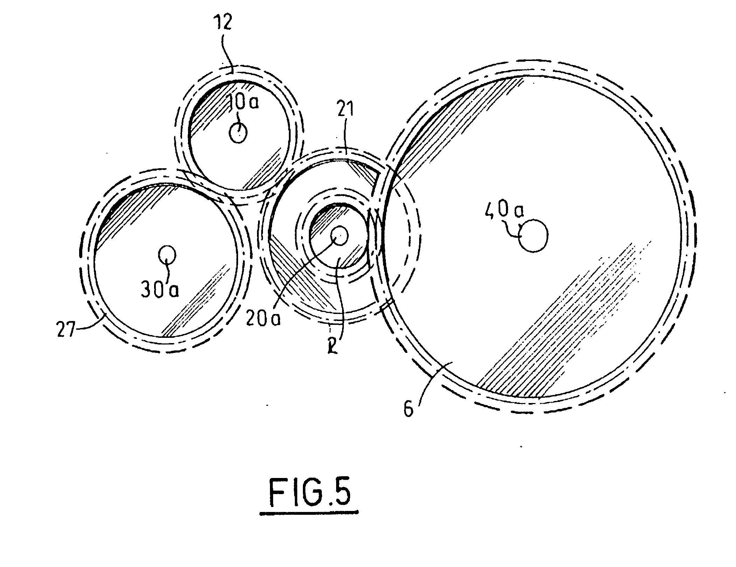

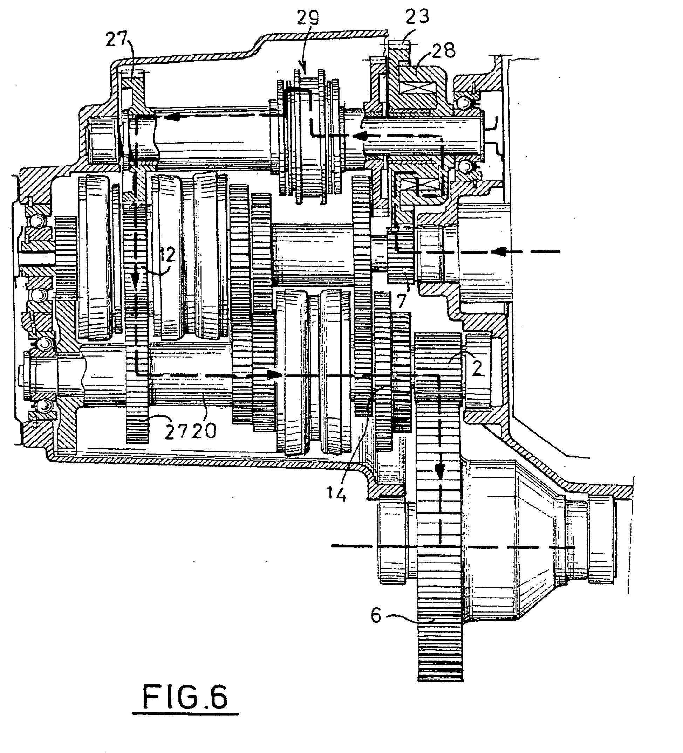

En première (voir figures 5 et 6), le mouvement passe dans les mêmes conditions du pignon fixe primaire de marche arrière et de marche arrière 7 sur le pignon d'entrée de première et de marche arrière 23 sur l'arbre auxiliaire 30. Le mouvement du pignon fou de première 27 est transféré de l'arbre auxiliaire 30 à l'arbre secondaire 20 par l'intermédiaire d'un pignon de renvoi 12 porté par l'arbre primaire 10, qui est le pignon fou de troisième. Le pignon fou de première 27, rendu solidaire de l'arbre 30 par le synchroniseur 29, transmet le mouvement reçu de ce dernier au pignon fou de troisième 12 du primaire 10. Ce dernier entraîne le pignon fixe de troisième sur le secondaire, qui transmet le mouvement à la couronne de pont 6 par le pignon d'attaque 2.

En résumé, Le pignon d'entrée 23 sur l'arbre auxiliaire 30 engrène avec un pignon fixe 7 porté par l'arbre primaire 10 et détermine les rapports de première et de marche arrière. La bague 28 transmet le couple du primaire 10 à l'arbre auxiliaire 30 uniquement sur ces rapports. Elle est entraînée par le pignon fou d'entrée de première et de marche arrière 23 parce que la bague de roue libre 28 et l'arbre auxiliaire 30 tournent alors moins vite que l'arbre primaire. Les rapports supérieurs sont obtenus sans « décraboter » le synchroniseur 29, mais en serrant successivement les coupleurs coniques des rapports supérieurs. Le serrage du coupleur de deuxième 31 permet au mouvement de passer du primaire sur l'arbre auxiliaire sans emprunter la bague 28 qui tourne alors plus vite que le pignon d'entrée 23. On passe ainsi de première en seconde sans rupture de couple entre les deux rapports. A partir de la deuxième et sur tous les rapports supérieurs, le pignon 23 ne tourne plus assez vite pour entraîner l'arbre auxiliaire par la bague 28. L'arbre 30 est alors en roue. On passe sous couple tous les rapports supérieurs de la boîte, par balance de couple entre les coupleurs : successivement entre le coupleur de deuxième 31 et le coupleur de troisième (également porté par le primaire 10), puis entre le coupleur de troisième et le coupleur de quatrième (porté par le secondaire), puis entre ce dernier et le coupleur de cinquième sur le primaire, enfin entre le coupleur de cinquième et celui de sixième (porté par le secondaire 20). Sur tous les rapports de marche avant à partir du deuxième Le synchroniseur de première 29 reste fermé (ou peut être décraboté à partir d'une certaine vitesse du véhicule), et la bague 28 n'est pas entraînée par le pignon d'entrée 23 sur l'arbre auxiliaire.

Un autre avantage de cette boîte de vitesses est que le renvoi du mouvement, nécessaire à la marche arrière, est assuré par un pignon fou porté par l'arbre primaire. Par rapport aux boîtes connues son rendement énergétique est supérieur, car seul le rapport de première requiert un renvoi de mouvement et des contacts de dentures supplémentaires.

## Revendications

1. Boîte de vitesses à arbres parallèles à engrenages, comprenant un arbre primaire (10) et un arbre secondaire (20) qui portent un ensemble de dentures fixes (7, 8, 9, 19, 21, 22) engrenant avec des pignons fous (17, 18, 11, 12, 13, susceptibles d'être couplés sélectivement avec l'arbre qui les porte par des dispositifs de couplage (29, 31, 32, 33) pour engager les différents rapports de la boîte, et un arbre auxiliaire (30) susceptible de recevoir et de renvoyer le mouvement de l'arbre primaire (10) sur l'arbre secondaire (20) sur certains rapports, **caractérisé en ce que** l'arbre auxiliaire (30) porte les pignons fous (26, 27) et le groupe de synchronisation crabotage (29) des rapports de première et de marche arrière.

2. Boîte de vitesses selon la revendication 1, **caractérisée en ce que** l'arbre auxiliaire (30) porte un pignon fou d'entrée (23) entraîné en permanence par l'arbre primaire (10) et une bague d'entraînement (28) solidaire de l'arbre auxiliaire (30), susceptible d'être entraînée par le pignon fou (23).

3. Boîte de vitesses selon la revendication 2, **caractérisée en ce que** la bague (28) est montée en roue libre autour du pignon d'entrée (23), de manière à transmettre le couple du primaire (10) à l'arbre auxiliaire (30) sur certains rapports.

4. Boîte de vitesses selon la revendication 3, **caractérisée en ce que** le pignon d'entrée (23) sur l'arbre auxiliaire (30) détermine les rapports de première et de marche arrière, et engrène avec un pignon fixe (7) porté par l'arbre primaire (10).

5. Boîte de vitesses selon la revendication 3, ou 4, **caractérisée en ce que** la bague (28) transmet le couple du primaire (10) à l'arbre auxiliaire (30) uniquement en première et en marche arrière.

6. Boîte de vitesses selon l'une des revendications précédentes, **caractérisée en ce que** le mouvement du pignon fou de première (27) est transféré de l'arbre auxiliaire (30) à l'arbre secondaire (20) par l'intermédiaire d'un pignon de renvoi (12) porté par l'arbre primaire (10).

7. Boîte de vitesse selon l'une des revendications 2 à 6, **caractérisée en ce que** le mouvement du pignon fou de marche arrière (26) est transféré de l'arbre auxiliaire (30) à l'arbre secondaire (20) par engrènement direct sur un pignon secondaire fixe de marche arrière (14).

8. Boîte de vitesses selon la revendication 6, **caractérisée en ce que** le pignon de renvoi de première (12) autour du primaire (10) est le pignon fou d'un des autres rapports de la boîte.

9. Boîte de vitesses selon la revendication 8, **caractérisée en ce que** le pignon de renvoi de première (12) est le pignon fou du rapport de troisième.

## Patentansprüche

1. Getriebe mit parallelen Getriebewellen, das eine Hauptwelle (10) und eine Nebenwelle (20) aufweist, die eine Einheit fixer Verzahnungen (7, 8, 9, 19, 21, 22) tragen, die in Freilaufräder (17, 18, 11, 12, 13) eingreifen, die selektiv mit der Welle, die sie trägt, durch Kupplungsvorrichtungen (29, 31, 32, 33) gekuppelt werden können, um die verschiedenen Gänge des Getriebes einzurücken, und eine Hilfswelle (30), die Bewegung empfangen und die Bewegung der Hauptwelle (10) auf die Nebenwelle (20) auf bestimmten Gängen zurückgeben kann, **dadurch gekennzeichnet, dass** die Hilfswelle (30) Freilaufräder (26, 27) und die Synchronisationsklauenkupplungsgruppe (29) des ersten Gangs und des Rückwärtsgangs trägt.

2. Getriebe nach Anspruch 1, **dadurch gekennzeichnet, dass** die Hilfswelle (30) ein Eingangsfreilaufrad (23) trägt, das ständig von der Hauptwelle (10) angetrieben wird, und einen Antriebsring (28), der fest mit der Hilfswelle (30) verbunden ist, der von dem Freilaufrad (23) angetrieben werden kann.

3. Getriebe nach Anspruch 2, **dadurch gekennzeichnet, dass** der Ring (28) frei laufend um das Eingangsrad (23) montiert ist, so dass das Moment der Hauptwelle (10) auf die Hilfswelle (30) auf bestimmten Gängen übertragen wird.

4. Getriebe nach Anspruch 3, **dadurch gekennzeichnet, dass** das Eingangsrad (23) auf der Hilfswelle (30) den ersten Gang und den Rückwärtsgang bestimmt und mit einem stationären Rad (7), das von der Hauptwelle (10) getragen wird, eingreift.

5. Getriebe nach Anspruch 3 oder 4, **dadurch gekennzeichnet, dass** der Ring (28) das Moment der Hauptwelle (10) zu der Hilfswelle (30) nur im ersten Gang und Rückwärtsgang überträgt.

6. Getriebe nach einem der vorhergehenden Ansprüche, **dadurch gekennzeichnet, dass** die Bewegung des Freilaufrads des ersten Gangs (27) von der Hilfswelle (30) auf die Nebenwelle (20) über ein Umlenkrad (12), das von der Hauptwelle (10) getragen wird, übertragen wird.

7. Getriebe nach einem der Ansprüche 2 bis 6, **dadurch gekennzeichnet, dass** die Bewegung des Freilaufrads des Rückwärtsgangs (26) von der Hilfswelle (30) auf die Nebenwelle (20) durch direktes Eingreifen auf einem stationären Rückwärtsgang-Nebenlaufrad (14) übertragen wird.

8. Getriebe nach Anspruch 6, **dadurch gekennzeichnet, dass** das Umlenkrad des ersten Gangs (12) um die Hauptwelle (10) das Freilaufrad eines der anderen Gänge des Getriebes ist.

9. Getriebe nach Anspruch 8, **dadurch gekennzeichnet, dass** das Umlenkrad des ersten Gangs (12) das Freilaufrad des dritten Gangs ist.

## Claims

1. Gearbox with parallel gear shafts, comprising a primary shaft (10) and a secondary shaft (20) which support a set of fixed cogs (7, 8, 9, 19, 21, 22) meshing with idler gears (17, 18, 11, 12, 13) capable of being coupled selectively with the shaft which supports the said gears by means of coupling devices (29, 31, 32, 33) for engaging the various gear ratios of the box, and an auxiliary shaft (30) capable of receiving and returning the movement of the primary shaft (10) to the secondary shaft (20) in certain gear ratios, **characterized in that** the auxiliary shaft (30) supports the idler gears (26, 27) and the dog-clutch synchromesh assembly (29) for the first gear and reverse gear ratios.

2. Gearbox according to Claim 1, **characterized in that** the auxiliary shaft (30) supports an input idler gear (23) permanently driven by the primary shaft (10) and a drive ring (28) integral with the auxiliary shaft (30) and capable of being driven by the idler gear (23).

3. Gearbox according to Claim 2, **characterized in that** the ring (28) is mounted so as to rotate freely about the input gear (23), so as to transmit the torque from the primary (10) to the auxiliary shaft (30) in certain gear ratios.

4. Gearbox according to Claim 3, **characterized in that** the input gear (23) on the auxiliary shaft (30) determines the first and reverse gear ratios and meshes with a fixed gear wheel (7) carried by the primary shaft (10).

5. Gearbox according to Claim 3 or 4, **characterized in that** the ring (28) transmits the torque from the primary (10) to the auxiliary shaft (30) only in first gear and reverse gear.

6. Gearbox according to one of the preceding claims, **characterized in that** the movement of the first idler gear (27) is transferred from the auxiliary shaft (30) to the secondary shaft (20) by means of a drive gear (12) supported by the primary shaft (10).

7. Gearbox according to one of Claims 2 to 6, **characterized in that** the movement of the reverse gear idler gear (26) is transferred from the auxiliary shaft (30) to the secondary shaft (20) by direct meshing with a fixed secondary reverse gear pinion (14).

8. Gearbox according to Claim 6, **characterized in that** the first gear drive gear (12) around the primary (10) is the idler gear for one of the other ratios of the box.

9. Gearbox according to Claim 8, **characterized in that** the first gear drive gear (12) is the idler gear for the third gear ratio.
